# FASCICULE DE BREVET EUROPEEN

(11) **EP 3 077 761 B1**
(45) Date de publication et mention de la délivrance du brevet: **03.01.2018**
(21) Numéro de dépôt: 14825397.4
(22) Date de dépôt: 26.11.2014
(51) Int. Cl.: F41H 7/04, B62D 24/00, B62D 24/02

(54) **VEHICULE BLINDE LIE A UN CHASSIS**
GEPANZERTES, AN EIN CHASSIS VERBUNDENES FAHRZEUG
SHIELDED VEHICLE CONNECTED TO A CHASSIS

(30) Priorité: 06.12.2013 FR 1302870
(43) Date de publication de la demande: 12.10.2016
(73) Titulaire: NEXTER Systems, 42328 Roanne Cedex (FR)
(72) Inventeur: SERPEAULT, Jérôme, F-18023 Bourges (FR)
(74) Mandataire: Cabinet Chaillot
(86) Numéro de dépôt international: PCT/FR2014/053041
(87) Numéro de publication internationale: WO 2015/082803

(56) Documents cités:
- EP-A1- 1 182 420
- WO-A1-2010/116361
- DE-A1- 3 601 701

## Description

Le domaine technique de l'invention est celui des véhicules blindés.

Les véhicules blindés comportent de façon classique une caisse blindée fixée à un châssis. La liaison entre une caisse et un châssis est faite habituellement par l'intermédiaire de plots de fixation souples ou rigides. Les châssis peuvent comporter une structure mécanosoudée qui porte des moyens de mobilité, tels que des roues ou des chenilles ainsi que des organes de transmission, tels que ponts et différentiels.

Les moyens de fixation classiques par plots ont pour inconvénient de réduire la cohésion entre caisse et châssis lors de l'explosion d'une mine ou d'un engin explosif improvisé. La séparation de la caisse et du châssis est préjudiciable aux occupants du véhicule, les accélérations communiquées à la caisse deviennent en effet trop fortes.

Il se pose par ailleurs pour les véhicules blindés le problème d'améliorer la protection de la caisse sans pour autant pénaliser de façon excessive la masse du véhicule.

On cherche ainsi dans la mesure du possible à définir des caisses dont l'épaisseur de paroi est modérée. Les caisses de véhicules blindés comportent très souvent une plaque de fond présentant un profil plan prolongé par deux rebords latéraux inclinés.

Une telle forme permet en effet d'éviter les rayons de courbure trop faibles lors du pliage de la tôle et elle permet aussi de donner au fond de la caisse un profil globalement convexe qui augmente la résistance de la caisse aux effets du souffle des mines ou engins explosifs improvisés.

Il existe cependant un risque de rupture du fond de la caisse au niveau des zones pliées, surtout lorsque l'épaisseur de la caisse est réduite.

On connaît par le brevet EP1182420 une protection de plancher pour véhicule qui comporte une plaque massive fixée à la caisse par l'intermédiaires de supports latéraux qui maintiennent la plaque à distance du plancher de la caisse et permettent, en cas d'explosion de mine, de transférer les efforts reçus par la plaque en direction des parois latérales de la caisse.

Une telle architecture est classique et prévoit l'adjonction d'un blindage supplémentaire en dessous de la caisse sans pour autant renforcer la caisse elle-même. Ce brevet est par ailleurs muet sur les moyens permettant de lier la caisse à un châssis qui n'est ni montré ni localisé par ce document.

Le but de l'invention est ainsi de proposer une architecture de véhicule qui permette d'augmenter la résistance de la caisse sans pénaliser la masse. Un autre but de l'invention est d'augmenter la résistance de la liaison entre la caisse et le châssis.

La conception du véhicule selon l'invention permet d'adapter par ailleurs facilement une caisse blindée à différents types de châssis.

Ainsi l'invention a pour objet un véhicule blindé comportant une caisse dont une paroi de fond présente un profil plan prolongé par deux rebords latéraux inclinés, caisse qui est liée à un châssis comprenant au moins deux longerons longitudinaux, véhicule caractérisé en ce que la liaison entre la caisse et les longerons est assurée par deux rangées d'une pluralité de renforts, régulièrement répartis sur sensiblement toute la longueur de la caisse au niveau de chaque longeron, renforts soudés à la caisse et comportant chacun une première surface d'appui disposée sous le profil plan et une seconde surface d'appui appliquée contre un rebord latéral, des moyens de fixation étant prévus par ailleurs pour lier chaque rangée de renforts à un des longerons.

Selon un mode de réalisation, les moyens de fixation pourront comprendre au niveau de chaque rangée de renforts au moins une plaque intermédiaire qui sera soudée en dessous de chaque rangée de renforts et qui sera liée par un moyen de liaison démontable à un longeron.

Avantageusement, la plaque intermédiaire pourra être liée à chaque longeron par une pièce d'interface soudée au longeron, pièce d'interface qui sera une tôle soudée au niveau d'une face supérieure du longeron et débordant latéralement de ce longeron, tôle liée au longeron également par des nervures de rigidification régulièrement réparties sur sensiblement toute la longueur des longerons.

Selon un mode particulier de réalisation, le véhicule blindé pourra comporter une plaque fixée en dessous du profil plan de la caisse.

La plaque pourra s'étendre en largeur sur sensiblement toute la largeur du profil plan de la paroi de fond, la plaque comportant des encoches pour recevoir les renforts.

Chaque renfort pourra comporter une branche horizontale ayant un profil comportant un dégagement permettant un démontage de la plaque.

La plaque pourra être fixée au profil plan de la caisse par vissage, les vis de fixation étant régulièrement réparties sur toute la longueur de la plaque.

Le véhicule pourra ainsi comporter une caisse en acier, la plaque étant en alliage d'aluminium.

L'invention sera mieux comprise à la lecture de la description qui va suivre de modes particuliers de réalisation, description faite en référence aux dessins annexés et dans desquels :
- La figure 1 est une vue schématique en coupe transversale d'un véhicule selon un premier mode de réalisation de l'invention ;
- La figure 2 est une vue latérale de ce même véhicule ;
- La figure 3 est une vue schématique en coupe transversale d'un véhicule selon un second mode de réalisation de l'invention ;
- La figure 4 est une vue de dessous de la caisse de ce dernier véhicule, longerons et plaque intermédiaire non représentés.

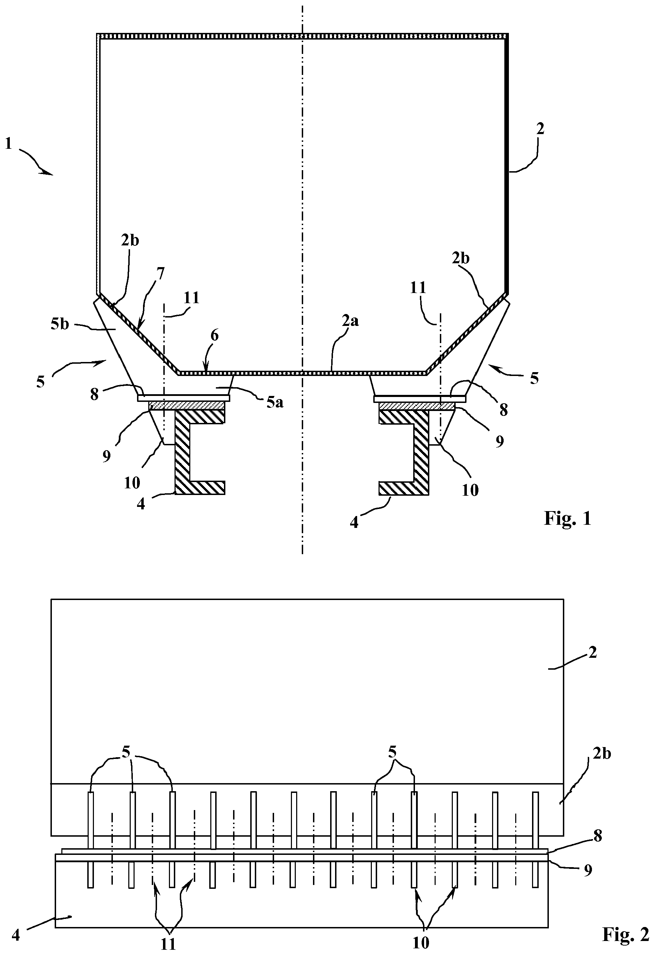

En se reportant à la figure 1, un véhicule 1, comprend une caisse 2 qui est liée à un châssis 3 comprenant au moins deux longerons longitudinaux 4.

Les longerons 4 sont des poutres métalliques ayant une forme classique en C. Ils soutiennent les moyens de mobilité du véhicules (ponts, roues ou chenilles). Ces moyens ne font pas partie de l'invention, il n'est donc pas nécessaire de les décrire en détails.

La caisse 2 comporte une paroi de fond 2a formant plancher pour l'habitacle et qui présente un profil plan. La paroi de fond 2a est prolongée par deux rebords latéraux inclinés 2b. La paroi de fond 2a et les rebords 2b sont avantageusement réalisés par pliage d'une seule et même tôle d'acier.

La caisse 2 présente ainsi une partie basse convexe dont les rebords 2b permettent de dévier le souffle lors de l'explosion d'une mine ou d'un engin explosif improvisé.

Conformément à l'invention, la liaison entre la caisse 2 et les longerons 4 est assurée par une pluralité de renforts 5 qui sont régulièrement répartis sur sensiblement toute la longueur de la caisse 2 au-dessus de chaque longeron 4. Cette répartition est plus particulièrement visible à la figure 2. Il y a ainsi deux rangées de renforts 5, une rangée étant positionnée au-dessus de chaque longeron 4.

Chaque renfort 5 est une pièce d'acier sous la forme d'une plaque 5. La plaque renfort 5 a un profil sensiblement en L ouvert comportant une branche horizontale 5a et une branche inclinée 5b. La branche horizontale 5a comporte une première surface d'appui 6 qui est disposée sous le profil plan 2a de la caisse. La branche inclinée 5b comporte une seconde surface d'appui 7 qui est appliquée contre un rebord latéral 2b de la caisse.

Les renforts 5 sont soudés à la caisse 2. Les soudures sont réalisées le long des bords des branches 5a et 5b.

Conformément à l'invention, des moyens de fixation sont prévus par ailleurs pour lier chaque rangée de renforts 5 à un des longerons 4.

Suivant un mode de réalisation, les moyens de fixation comprennent au niveau de chaque rangée de renforts une plaque intermédiaire 8.

Une plaque intermédiaire 8 est soudée à chaque renfort 5 et elle est positionnée en dessous d'une rangée de renforts 5.

Comme on le voit sur les figures 1 et 2, chaque longeron 4 porte sur sa face supérieure une pièce d'interface 9 qui est soudée au longeron. Cette pièce d'interface est une tôle soudée au niveau d'une face supérieure du longeron et qui déborde latéralement de ce longeron (voir figure 1). La tôle 9 est également liée au longeron 4 par des nervures 10 de rigidification qui sont régulièrement réparties sur sensiblement toute la longueur de chaque longeron 4 (voir figure 2).

La plaque intermédiaire 8 est liée au longeron 4 par un moyen de liaison démontable qui est formé par une série de vis ou boulons 11 (seul les axes sont représentés sur les figures).

Comme on le voit plus particulièrement sur la figure 2, les vis 11 sont disposées en alternance avec les renforts 5 et il y a une vis 11 entre chaque renfort 5.

On remarque également à la figure 2 que les renforts 5 sont disposés avec un écartement tel qu'ils se trouvent, après montage de la caisse 2, sensiblement en regard des nervures 10 de la pièce d'interface 9.

La liaison entre les longerons 4 et la caisse 2, donc entre la caisse 2 et le châssis, est particulièrement rigide. Les risques de rupture de la liaison lors d'un choc de mine sont réduits. Il n'y a pas de désolidarisation du châssis et de la caisse, donc l'accélération communiquée à l'équipage est minimisée.

L'ensemble reste cependant démontable pour les opérations de maintenance ou de remise à niveau du véhicule.

On pourra par ailleurs fixer la caisse équipée des renforts 5 et des plaques intermédiaires 8 sur un autre type de châssis ayant des longerons différents d'un point de vue dimensionnel. Il suffira de prévoir sur les longerons une interface de fixation appropriée (pièce interface 9).

L'invention permet ainsi de faciliter la conception des véhicules blindés en permettant d'adapter une caisse donnée à différents types de châssis sans pour autant reconcevoir l'ensemble du véhicule.

En fonction de la taille des longerons 4 il serait possible de ne pas prévoir de pièce interface 9 et de fixer directement par vissage la plaque intermédiaire 8 au longeron 4 considéré.

A titre de variante, il serait également possible de ne pas prévoir de plaques intermédiaires 8 et de visser directement les renforts 5 au longeron 4 considéré (ou à la pièce interface 9). Pour cela on réalisera des renforts 5 portant des pattes latérales permettant la mise en place de vis de fixation. Les plaques intermédiaires 8 permettent cependant de compléter la rigidification de la liaison entre la caisse 2 et les deux rangées de renforts 5.

On remarque également que les renforts 5 assurent un soutien de la caisse, tant au niveau de la paroi de fond 2a que des rebords 2b. Une telle configuration assure le soutien des rebords latéraux pliés et améliore la résistance mécanique de la caisse avec une épaisseur minimisée pour les tôles formant le fond de la caisse (donc avec une masse réduite).

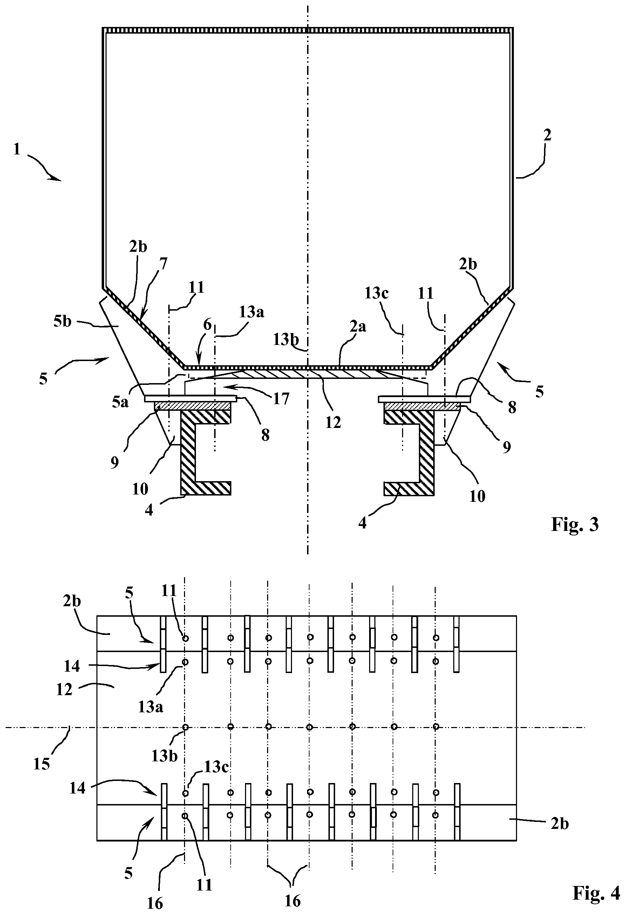

Les figures 3 et 4 montrent un autre mode de réalisation de l'invention.

Ce mode ne diffère du précédent que par l'adjonction d'une plaque plane 12 assurant protection et rigidification, plaque qui est fixée en dessous du profil plan 2a de la caisse. La plaque 12 est réalisée en un alliage d'aluminium. Cette plaque a pour fonction de rigidifier le profil plan 2a de la caisse (en acier) au niveau du plancher de la caisse. A cet effet on pourra associer une plaque 12 de 20 à 30 mm d'épaisseur en alliage d'aluminium avec une caisse d'acier dont le profil plan 2a a environ 10 mm d'épaisseur. La plaque 12 est représentée sur la figure 3 coupée en arrière des renforts 5.

En fonction du niveau de protection recherché, la plaque 12 pourra être réalisée en un matériau composite.

Comme on le voit à la figure 4, la plaque 12 s'étend en longueur sur toute la longueur de la caisse 2 et en largeur sur sensiblement toute la largeur du profil plan 2a de la paroi de fond de la caisse. La plaque couvre ainsi tout l'espace séparant les deux longerons 4.

Pour permettre sa mise en place après la soudure des renforts 5, la plaque 12 comporte des encoches 14 entourant les renforts 5. Pour permettre un démontage ultérieur de la plaque 12, la branche horizontale 5a de chaque renfort 5 aura un profil comportant un dégagement 17 permettant la sortie de la plaque 12 après son dévissage et malgré la présence de la plaque intermédiaire 8 (voir figure 3).

La plaque 12 est fixée au profil plan 2a de la paroi de fond de la caisse 2 par vissage, les vis de fixation 13a, 13b et 13c sont régulièrement réparties sur trois rangées et sur toute la longueur de la plaque 12.

Comme on le voit à la figure 4, des vis 13a et 13c sont positionnées au voisinage des bords de la plaque 12 et d'autres vis 13b sont disposées sensiblement au niveau d'un axe médian 15 de la caisse 2. Les vis latérales 13a et 13c sont disposées entre les renforts 5. Les vis sont ainsi réparties suivant plusieurs groupes, chaque groupe étant aligné le long d'une direction 16 perpendiculaire à l'axe médian 15 de la caisse 2. On remarque que les vis 11 qui permettent la fixation de la plaque intermédiaire 8 à la pièce d'interface 9 sont disposées suivant la même direction 16 que les vis 13a, 13b et 13c d'un même groupe.

La rigidification du profil plan 2a de la paroi de fond de la caisse est accrue par une répartition régulières des vis de fixation 13a,13b et 13c sur la longueur et la largeur de la plaque 12.

Il est bien sûr possible de prévoir un moyen de blindage complémentaire qui sera fixé en dessous de la plaque 12, entre les longerons 4. Ce moyen pourra être fixé directement sur les longerons 4.

## Revendications

1. Véhicule blindé (1) comportant une caisse (2) dont une paroi de fond présente un profil plan (2a) prolongé par deux rebords latéraux inclinés (2b), caisse qui est liée à un châssis comprenant au moins deux longerons (4) longitudinaux, véhicule ***caractérisé en ce que*** la liaison entre la caisse (2) et les longerons (4) est assurée par deux rangées d'une pluralité de renforts (5), régulièrement répartis sur sensiblement toute la longueur de la caisse (2) au niveau de chaque longeron (4), renforts soudés à la caisse et comportant chacun une première surface d'appui (6) disposée sous le profil plan (2a) et une seconde surface d'appui (7) appliquée contre un rebord latéral (2b), des moyens de fixation (8,11) étant prévus par ailleurs pour lier chaque rangée de renforts (5) à un des longerons (4).

2. Véhicule blindé selon la revendication 1, **caractérisé en ce que** les moyens de fixation comprennent au niveau de chaque rangée de renforts (5) au moins une plaque intermédiaire (8) qui est soudée en dessous de chaque rangée de renforts (5) et qui est liée par un moyen de liaison démontable (11) à un longeron (4).

3. Véhicule blindé selon la revendication 2, **caractérisé en ce que** la plaque intermédiaire (8) est liée à chaque longeron (4) par une pièce d'interface (9) soudée au longeron (4), pièce d'interface qui est une tôle soudée au niveau d'une face supérieure du longeron (4) et débordant latéralement de ce longeron, tôle liée au longeron également par des nervures (10) de rigidification régulièrement réparties sur sensiblement toute la longueur des longerons (4) .

4. Véhicule blindé selon une des revendications 1 à 3, **caractérisé en ce qu'**il comporte une plaque (12) fixée en dessous du profil plan (2a) de la caisse.

5. Véhicule blindé selon la revendication 4, **caractérisé en ce que** la plaque (12) s'étend en largeur sur sensiblement toute la largeur du profil plan (2a) de la paroi de fond, la plaque (12) comportant des encoches (14) pour recevoir les renforts (5).

6. Véhicule blindé selon la revendication 5, **caractérisé en ce que** chaque renfort (5) comporte une branche horizontale (5a) ayant un profil comportant un dégagement (17) permettant un démontage de la plaque (12).

7. Véhicule blindé selon une des revendications 4 à 6, **caractérisé en ce que** la plaque (12) est fixée au profil plan (2a) de la caisse par vissage, les vis de fixation (13a,13b,13c) étant régulièrement réparties sur toute la longueur de la plaque (12).

8. Véhicule blindé selon une des revendications 4 à 7, **caractérisé en ce qu'**il comporte une caisse (2) en acier, la plaque (12) étant en alliage d'aluminium.

## Patentansprüche

1. - Gepanzertes Fahrzeug (1) mit einem Kasten (2), dessen eine Bodenwand ein ebenes Profil (2a) aufweist, das durch zwei geneigte seitliche Ränder (2b) verlängert wird, wobei der Kasten mit einem Fahrgestell verbunden ist, das mindestens zwei Längsträger (4) umfasst, wobei das Fahrzeug **dadurch gekennzeichnet ist, dass** die Verbindung zwischen dem Kasten (2) und den Längsträgern (4) durch zwei Reihen einer Vielzahl von Verstärkungen (5) gesichert wird, die regelmäßig über im wesentlichen die ganze Länge des Kastens (2) auf Höhe jedes Längsträgers (4) verteilt sind, wobei die Verstärkungen mit dem Kasten verschweißt sind und jeweils eine erste Auflagefläche (6) umfassen, die unter dem ebenen Profil (2a) angeordnet ist, und eine zweite Auflagefläche (7), die gegen einen seitlichen Rand (2b) angebracht ist, wobei außerdem Befestigungsmittel (8, 11) vorgesehen sind, um jede Reihe von Verstärkungen (5) mit einem der Längsträger (4) zu verbinden.

2. - Gepanzertes Fahrzeug nach Anspruch 1, **gekennzeichnet dadurch, dass** die Befestigungsmittel auf Höhe jeder Reihe von Verstärkungen (5) mindestens eine Zwischenplatte (8) umfassen, die unterhalb jeder Reihe von Verstärkungen (5) verschweißt ist und die durch ein abmontierbares Verbindungsmittel (11) mit einem Längsträger (4) verbunden ist.

3. - Gepanzertes Fahrzeug nach Anspruch 2, **gekennzeichnet dadurch, dass** die Zwischenplatte (8) mit jedem Längsträger (4) durch ein Schnittstellenelement (9) verbunden ist, das mit dem Längsträger (4) verschweißt ist, wobei das Schnittstellenelement ein Blech ist, das auf Höhe einer Oberseite des Längsträgers (4) verschweißt ist und seitlich über diesen Längsträger ragt, wobei das Blech mit dem Längsträger auch durch Versteifungsrippen (10) verbunden ist, die regelmäßig über im wesentlichen die ganze Länge der Längsträger (4) verteilt sind.

4. - Gepanzertes Fahrzeug nach einem der Ansprüche 1 bis 3, **gekennzeichnet dadurch, dass** es eine Platte (12) umfasst, die unterhalb des ebenen Profils (2a) des Kastens befestigt ist.

5. - Gepanzertes Fahrzeug nach Anspruch 4, **gekennzeichnet dadurch, dass** die Platte (12) sich in der Breite über im wesentlichen die gesamte Breite des ebenen Profils (2a) der Bodenwand erstreckt, wobei die Platte (12) Kerben (14) aufweist, um die Verstärkungen (5) aufzunehmen.

6. - Gepanzertes Fahrzeug nach Anspruch 5, **gekennzeichnet dadurch, dass** jede Verstärkung (5) einen waagrechten Ast (5a) mit einem Profil mit einem Freiraum (17) umfasst, so dass eine Demontage der Platte (12) ermöglicht wird.

7. - Gepanzertes Fahrzeug nach einem der Ansprüche 4 bis 6, **gekennzeichnet dadurch, dass** die Platte (12) an dem ebenen Profil (2a) des Kastens durch Verschrauben befestigt ist, wobei die Befestigungsschrauben (13a, 13b, 13c) regelmäßig über die gesamte Länge der Platte (12) verteilt sind.

8. - Gepanzertes Fahrzeug nach einem der Ansprüche 4 bis 7, **gekennzeichnet dadurch, dass** es einen Kasten (2) aus Stahl umfasst, wobei die Platte (12) aus einer Aluminiumlegierung ist.

## Claims

1. - An armoured vehicle (1) comprising a body (2) a bottom wall of which has a planar profile (2a) extended by two laterally inclined rims (2b), the body being connected to a chassis comprising at least two longitudinal side members (4), the vehicle being **characterised in that** the connection between the body (2) and the side members (4) is provided by two rows of a plurality of reinforcing pieces (5), regularly distributed substantially all along the length of the body (2) at each side member (4), the reinforcing pieces being welded to the body and each comprising a first support surface (6) disposed under the planar profile (2a) and a second support surface (7) applied against a lateral rim (2b), attaching means (8, 11) being further provided to connect each row of reinforcing pieces (5) to one of the side members (4).

2. - The armoured vehicle according to claim 1, **characterised in that** the attaching means have, at each row of reinforcing pieces (5), at least one middle plate (8) which is welded below each row of reinforcing pieces (5) and which is connected by a removable connecting means (11) to a side member (4).

3. - The armoured vehicle according to claim 2, **characterised in that** the middle plate (8) is connected to each side member (4) by an interface part (9) welded to the side member (4), the interface part being a sheet metal welded at an upper face of the side member (4) and laterally protruding from this side member, the sheet metal being connected to the side member also by stiffening ribs (10) regularly distributed substantially all along the length of the side members (4).

4. - The armoured vehicle according to one of claims 1 to 3, **characterised in that** it has a plate (12) attached below the planar profile (2a) of the body.

5. - The armoured vehicle according to claim 4, **characterised in that** the plate (12) extends in width substantially all along the width of the planar profile (2a) of the bottom wall, the plate (12) comprising notches (14) for receiving the reinforcing pieces (5).

6. - The armoured vehicle according to claim 5, **characterised in that** each reinforcing piece (5) has a horizontal leg (5a) having a profile comprising a clearance (17) allowing to disassemble the plate (12).

7. - The armoured vehicle according to one of claims 4 to 6, **characterised in that** the plate (12) is attached to the planar profile (2a) of the body by screwing, the fastening screws (13a,13b,13c) being regularly distributed all along the length of the plate (12).

8. - The armoured vehicle according to one of claims 4 to 7, **characterised in that** it comprises a steel body (2), the plate (12) being made of an aluminium alloy.
